# EUROPEAN PATENT APPLICATION

(11) **EP 0 755 723 A2**
(43) Date of publication of application: **29.01.1997**
(21) Application number: 96650031.6
(22) Date of filing: 26.07.1996
(51) Int. Cl.: B05B 15/12

(54) **Spray booth paint reclamation apparatus and method**

(30) Priority: 27.07.1995 US 508308
(71) Applicant: HADEN, INC.,, Auburn Hills, Michigan 48326 (US)
(72) Inventor: Johnson, Jeffrey, Beverly Hills, Michigan 48025 (US); St. Louis, Daniel M., MaComb, Michigan 48042 (US); Slater, Andrew, Troy, Michigan 48098 (US)
(74) Representative: Casey, Lindsay Joseph

(57) **Abstract**

An apparatus and process for reclaiming paint overspray from a paint-laden air stream exiting a paint spray booth. A preferred embodiment of the apparatus utilizes a packed spray tower with captured paint overspray as its scrubbing liquor. The scrubbing liquor is recirculated through the tower until it reaches a sufficient concentration of paint for reuse in the paint operation.

## Description

### Background of the Invention

The present invention relates generally to an apparatus and process for reclaiming paint overspray. More particularly, it relates to the reclamation of paint from a paint-laden air stream discharged from a paint spray booth in which the paint overspray forms part of the scrubbing liquor.

Recovery of paint overspray from paint spray booths, particularly in large automotive paint finishing operations, has become increasingly more important. This paint overspray consists of paint solids that are either waterbourne or disposed in organic solvents. It has recently been estimated that in the automotive and related coatings industries, between 20% to 40% of the total volume of paint spray is overspray (see U.S. Patent 5,298,186 to Mitchell). This paint overspray causes a number of environmental and economic problems, and more restrictive environmental regulation has led to an increased emphasis on the recycling of paint overspray.

Normally, paint overspray is diluted by collecting it in a sump or wet booth containing water. An example of a spray booth utilizing a wet booth is shown in U.S. Patent No. 4,222,319, hereby incorporated by reference into this disclosure. The diluted paint overspray contained within the wet booth is then processed either by removing the paint solids from the wet booth water or by reconstituting the paint solids to the same level of concentration as the original paint solution. Either process ultimately requires separation of the paint solids from the wet booth water.

The removal of excess paint solids generated within a paint spray booth following dilution of the paint overspray requires time-consuming and expensive processes such as ultrafiltration, recapture of paint solids through membranes, steam vacuums, the injection of chemical coagulants (such as disclosed in U.S. Patent No. 3,764,013 to Eisenmann), and/or electrophoretic separation to separate the paint solids from the spray booth water. Ultrafiltration, for example, is not commercially feasible for use with effluent from paint spray booths which require as much as 10,000 gallons of water per minute, as noted in the Cosper patent.

Thus, difficulties in recycling paint overspray are only increased by the current "dilution" recovery techniques. As other examples, U.S. Patent Nos. 4,353,715 to Mir and 4,378,235 to Cosper each disclose the use of a solvent-capturing medium (such as an oil/water emulsion) disposed in a water base, to scrub a paint-laden air stream. The teaching of each patent then requires reconcentration of the paint solvent, either through ultrafiltration or other techniques, and/or removal of the solvent-capturing medium from the paint solvent in order to reuse the paint solution.

Also, in addition to this dilution and post-dilution processing, the paint-laden air stream continuously flowing through paint spray booth is typically "scrubbed" of paint contaminants using water as the scrubbing liquor. Thus, separate treatment of both the air stream and the paint/water mixture within the wet booth has been required.

The dilution of paint overspray with water also results in secondary problems. For example, some dilution techniques require the use of additives to the recovered paint to cure viscosity problems that develop during recovery. These additives, however, can limit the applications in which the recovered paint solids can be reused.

To date, no known paint recovery system has been developed for reclaiming paint overspray which solves the problems resulting from dilution techniques in a sufficiently satisfactory manner. It is, therefore, desirable to provide an apparatus and process for paint overspray recovery and recycling that does not require dilution or chemical alteration.

### Summary of the Invention

The present invention is directed to the recovery and reuse of spray paint emissions. In accordance with the present invention, paint overspray is scrubbed from the air using the paint overspray itself as the scrubbing media. This process avoids dilution and makes chemical addition unnecessary.

In the preferred process, a paint-laden air stream is transferred from an operation area, such as a paint spray booth, to a scrubbing device, such as a packed spray tower or a tube-type scrubbing arrangement. The scrubbing liquor, now containing paint scrubbed from the air stream, is recirculated through the scrubbing device, and this process continues until the scrubbing liquor reaches a preselected, desired concentration of paint solids. Then, a portion of the scrubbing liquor can be bled off from the system and treated further, if desired (such as by the addition of paint solvents, or by filtering particulate contaminants), prior to ultimate reuse. Alternatively, rather than selectively removing a portion of the concentrated scrubbing liquor, the entire batch of liquor reaching the preselected paint solids level can be removed off-line for further treatment, prior to reuse.

As the scrubbing liquor reaches the desired concentration of paint solids (which may range from 0% to 60% or 20% to 55% or 30% to 50% or 20% to 25% paint solids, by weight) is removed from the system, the system can be replenished with liquid (such as wet booth water, in the case of a paint spray booth). Preferably, a steady state condition is reached in which the total volume of scrubbing liquor within the system remains constant.

A paint reclamation system and apparatus also forms a part of the present invention. The system includes a scrubbing device for removing at least a portion of the paint from the air stream, and transferring the removed paint to a scrubbing liquor. Also included is a means for recirculating the scrubbing liquor (such as a pump) containing the paint removed from the air stream back to the scrubbing device, to concentrate the scrubbing liquor with paint to a desired, preselected concentration. A holding tank can be used to collect the scrubbing liquor exiting the scrubbing device, prior to its recirculation back to the scrubbing device.

The scrubbing device can be a spray tower containing packing elements or, alternatively, a tube-type scrubbing arrangement (which may include a dynatube or venturi tube). Means, such as conduits and valves, can be used continually replenish the scrubbing liquor within the holding tank, as scrubbing liquor reaching the desired paint concentration is removed from the system.

Accordingly, one object of the present invention is to provide a process for recapturing and recycling paint overspray emissions from a paint spray booth that does not require that the paint be reclaimed from diluting water.

A further object of the present invention is the recapture and recycling of spray paint without the use of chemical additives, and without limiting the potential uses of the recaptured paint.

Another object of the invention is to provide a more economical and environmentally safe paint reclamation process that can be retrofitted to existing paint spray booth facilities.

Yet another object of the present invention is to provide a single treatment that will remove paint from the air stream exiting a paint spray booth, without requiring reclamation of the paint from a diluting liquid such as water.

### Brief Description of the Drawings

FIGURE 1 is a front cross-sectional view of an automotive paint spray booth and scrubbing tower employing one embodiment of the paint reclamation apparatus and method of the present invention;
FIGURE 2 is a front cross-sectional view of a second embodiment of the present invention employed in a conventional paint spray booth having a tube-type scrubbing arrangement;
FIGURE 3 is a front cross-sectional view of a third embodiment of the present invention similar to the embodiment shown in FIGURE 2, but employing a different tube-type scrubbing arrangement; and
FIGURE 4 is a schematic diagram of the process steps of a preferred embodiment of the present invention.

### Detailed Description of the Preferred Embodiment

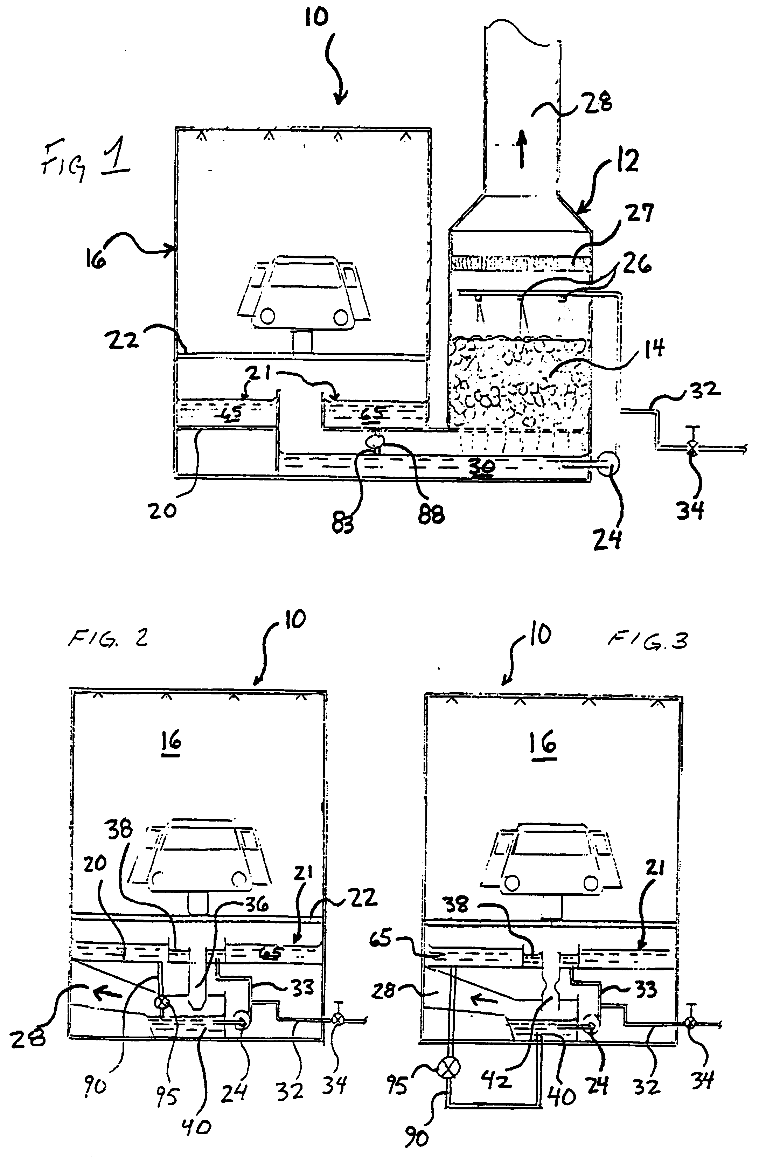

A preferred embodiment of the paint overspray reclamation system of the present invention, designated generally as 10, is shown in FIGURE 1. The system 10 preferably includes a packed tower 12 which employs plastic packing elements 14 of the type disclosed in U.S. Patent No. 4,668,442 and sold as Lanpac® Tower Packing by Lantec Products Inc. of Agoura Hills, California. Tower 12 receives air laden with paint overspray from a paint spray booth 16 via a duct 28. Paint spray booth 16, in turn, receives air from an open conduit or supply plenum (not shown), which mixes with the paint applied to the automobiles.

Booth 16 is designed to do as little scrubbing as possible. Wet booths 21 include wet floors 20, located beneath supporting grate 22; floors 21 remain flooded with wet booth water 65 to ensure cleanliness. However, the total water used in the spray booth system is greatly reduced in comparison to current spray booth systems, since the current system does not require the use of water-filled sludge pits, settling ponds or sluices to accomplish paint reconcentration. The small amount of water that remains on floor 20 will pick up only a minimal amount of the paint from the booth 16, and can be used in the spray tower 12, if necessary, as discussed below. The booth wet floor water is replenished through an external supply of fresh water.

The scrubbing liquor used in the system is reclaimed paint overspray. The scrubbing liquor from the spray booth collects in well or sump 30 and is introduced to the top of packed spray tower 12 by a pump 24 that conveys the recirculating fluid through sprayers 26 that impact upon the packing elements 14. Meanwhile, air laden with paint overspray is introduced at the bottom of tower 12 through duct 28, and circulates up through the tower. This process creates intimate contact between the two fluid streams among the packing elements 14, thus increasing the paint concentration in the scrubbing liquor. The air stream, now scrubbed of paint, passes through a demister 27. The demister consists of a series of baffles in which any residual liquid particles are removed from the air stream. Finally, the scrubbed air stream circulates through a duct 28. The scrubbing liquor collects back in sump or well 30, where it is recirculated back to the top of the tower 12 by pump 24. Once the scrubbing liquor has reached a concentration of paint solids necessary for reuse (such as, for example, in the spray booth), it can be bled off from duct 28 by valve 34 through conduit 32. Alternatively, the entire batch of scrubbing liquor reaching the preselected level of paint solids can be removed from system 10, for further treatment prior to reuse. The air stream exhaust emerging from duct 28 can also receive additional treatment outside of system 10 for the further removal of (e.g.) volatile organic compounds (VOCs).

Multiple "concentrator" (e.g., scrubber or spray tower 12) modules can be used with a single paint spray booth (e.g., a booth two hundred feet long might use six separate concentrator modules). The liquid within separate concentrator modules according to the present invention are preferably linked in series, so that water from the wet floor of a paint spraybooth cascades to a first concentrator, and then the paint/water effluent from the first concentrator passes to the second concentrator, and on to a third, etc. The air flowing through the separate concentrator modules flows in "parallel," e.g., air from the booth separates into six separate air streams, with each air stream flowing through a separate concentrator module. This cascading series of paint concentrators results in the last concentrator in series having the highest level of paint solids. This embodiment also makes paint as quickly as possible, minimizing pumping (which is thought to break up paint resins) and potential bacterial growth. (Of course, liquid flow through the concentrators could also be in parallel if a low level of paint concentration was required, for example.)

Another advantage to a paint reclamation system using a cascading series of paint concentrators is that such a system is self-cleaning. In other words, during non-production periods when paint-laden air is not passing into the first concentrator from the booth, "make-up" (preferably deionized) water from the first concentrator will maintain the tank level (given evaporation) within the next concentrator in series; eventually, this will result (during non-production periods) in the last concentrator in series having all of the paint within the system (i.e., there will be no paint within the concentrators upstream of the last concentrator).

An "off-line concentrator" can also be used. Foaming can begin to build up as the level of paint solids increases within a scrubber. Scrubbers connected to the paint spray booth that experience foaming problems can cause air balance problems within the booth. To deal with this problem, once the level of paint solids within the system reaches a certain, predetermined level, the liquor can be circulated to an off-line scrubber not connected with the spray booth, where further paint concentration can take place without the prospect of foaming influencing the booth.

Reclamation system 10 can be shut down periodically for maintenance to minimize fouling within packing elements 14 and any accompanying potential pressure drop across spray tower 12. This maintenance, in the case of water-based paints, can be performed simply by bleeding off the scrubbing liquor and rinsing down packing elements 14 with deionized water. The system can then be restarted by reintroducing scrubbing liquor into the top of the tower. With solventborne paints, paint solvent, or water mixed with solvent, can be used to rinse down the packing elements for in situ cleaning. Alternatively, the fouled packing elements can be replaced with new packing elements.

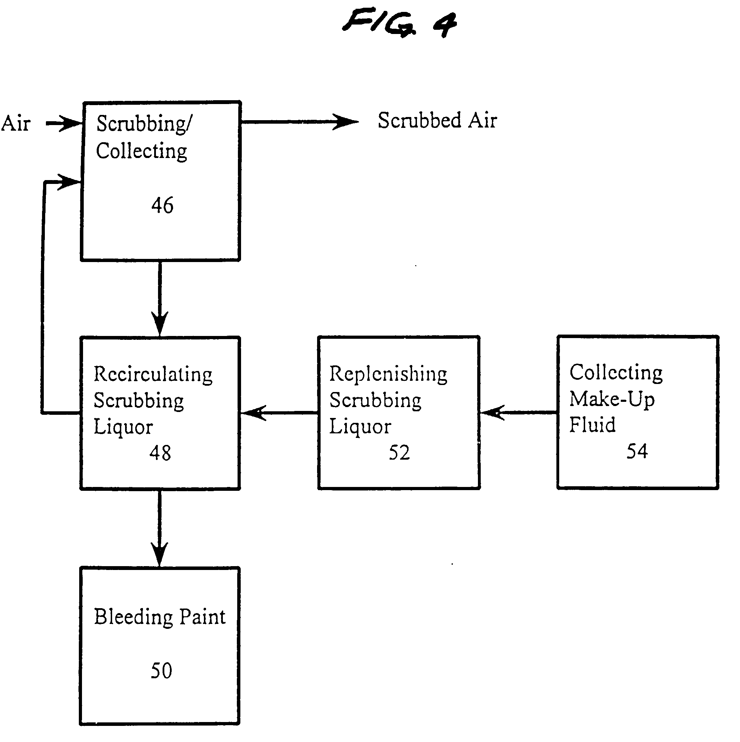

An alternative embodiment of the present invention may be used with a more conventional booth design employing tube-type scrubbing arrangements, as shown in FIGURES 2 and 3. These tube-type scrubbing arrangement, well known to those of ordinary skill in the art, include a dynatube 36 (FIGURE 2) or a venturi tube 42 (FIGURE 3), preferably surrounded by an inlet well or separating pond 38 that separates the scrubbing liquor from the booth wet floor water 65. With either the venturi tube or the dynatube embodiment, the scrubbing liquor impacts against the constricted throat of the tube. The constricted design creates a turbulent fluid flow that the concurrently flowing air stream traverses, scrubbing the entrained paint from the paint-laden air stream.

The wet booth floor water acts to keep the booth floor free from any buildup of paint sludge. Inlet well 38 acts in concert with the dynatube or venturi tube and impact pond 40, positioned below the tube scrubber removes paint from the paint-laden air stream. Inlet well 38 holds the scrubbing liquor prior to its concurrent flow with the paint-laden air stream during the scrubbing process. The scrubbing effect of the paint-laden air stream takes place above impact pond 40. The scrubbing liquor flowing down through dynatube 36 (or, alternatively, venturi tube 42) mixes with the air stream flowing in the same direction, removing significant portions of the paint spray entrained in the air stream. As the scrubbing liquor cascades into impact pond 40, a turbulent fluid flow is created that the air stream traverses in turning and flowing abruptly out through exhaust 28 (as shown by the arrow). In this manner, well known to those of ordinary skill in the art, paint remaining from the air stream is removed.

Both the dynatube and venturi scrubbing embodiments result in an air stream, now scrubbed of its paint particulate, which flows to exhaust 28, while the scrubbing liquor settles in impact pond 40. The scrubbing liquor is then recirculated to inlet well 38 by pump 24 and conduit 33 for further scrubbing use. The scrubbing liquor is recirculated through the system until it has the appropriate level of paint solids; then it can be bled off for reuse by valve 34 and conduit 32. As shown in FIGURE 1 and conduit 83 and valve 88, the wet floor water 65 may be used to replenish the scrubbing liquor, providing a lower initial concentration of paint particulate.

Accordingly, it will now be appreciated that the use of the present invention allows, through a single scrubbing process, the simultaneous treatment of an air stream and the eventual reclamation of paint for reuse in an operation such as a paint spray booth. Other applications and operations will, of course, be apparent to those of skill in the art.

The paint solids reclaimed from the system can receive additional treatment off-line, as required. Thus, the reclaimed paint solids may require the addition of paint solvents lost during scrubbing. Filtering of the reclaimed paint solids may also be required to remove dirt or other particulate contaminates. It has been found that reclaimed paint according to the present invention can be easily treated so as to be virtually indistinguishable from commercially available paint.

A variant on the embodiments shown in FIGURES 2 and 3 can be used with either waterbourne or water-immiscible solventbourne paints. In this embodiment, scrubbing liquor is pumped over the entire wet floor 20 of booth 16 in place of water. This embodiment would not require the use of a separate pond 38, as the wet floor paint would flow directly into the venturi tube 42 or dynatube 36 where it would scrub solventborne paint from the paint-laden air stream. However, this alternative would not be as safe or as clean as the use of water on wet floor 20, since now the whole flooded floor is covered with flammable paint solvent, as well as other materials in the paint overspray (such as grease from the painted vehicles).

A preferred embodiment of the method of reclaiming paint (and simultaneously scrubbing an air stream) which also forms part of the present invention is shown schematically in FIGURE 4. First, a paint-laden air stream is contacted with a scrubbing liquor (block 46). Next, the scrubbing liquor is recirculated and once again contacts the paint-laden air stream, and this continues until the scrubbing liquor has reached a sufficient concentration of paint solids (block 48). Then, the scrubbing liquor is selectively bled off for its final preparation prior to reuse (block 50), while the scrubbing liquor is preferably replenished from the wet booth water (block 52).

Referring also to FIGURES 2 and 3, in order to maintain a steady state system with a constant volume of the solid/liquid paint mixture flowing through the system, the further step of circulating "make-up" water from wet booths 21 to impact pond 40 can be performed, using conduit 90 and valve 95 (see also block 54 of FIGURE 4). Alternatively, referring now to FIGURE 1, this make-up water from wet booths 21 can be sent directly into the top of the spray tower.

Again, it is preferred, as mentioned above, to minimize the liquid volume recirculating through the system. While the packing element must stay wetted, minimizing the volume of water flowing through the packed spray tower, for example, will minimize the air pressure needed to maintain air flowing through the tower, reducing energy costs.

While prior art systems utilize liquid scrubbing media with less than 3%-5% paint solvents, by weight (and typically less than 1% paint solvents, by weight), the present invention can achieve paint concentrations of anywhere from 0% to over 60%. For example, with typical automotive paint applications, such as in a paint spray booth, the optimum concentration of paint solids will be between about 30%-50%, by weight, for waterbourne paints. Other suitable range concentrations would be between about 20% and 55% by weight or between 30% and 50% by weight or between 20% and 25% by weight.

Of course, it should be noted that various changes and modifications to the preferred embodiments of this invention will be apparent to those skilled in the art, which can be made without departing from the spirit and scope of the present invention. For instance, the present invention also envisions the use of electrophoretic separators or other devices used in place of a spray tower/scrubber to remove paint from a paint-laden air stream. It is, therefore, intended that such changes and modifications be covered by the following claims.

## Claims

1. A process for reclaiming paint overspray from a paint-laden air stream exiting a paint spray booth, comprising the steps of:
a. passing the air stream through a scrubbing device which includes a scrubbing liquor, the scrubbing device transferring the paint from the air stream to the scrubbing liquor;
b. recirculating the scrubbing liquor back through the scrubbing device; and
c. repeating steps a and b until the scrubbing liquor reaches a predetermined concentration of paint.

2. A process as claimed in Claim 1 wherein the predetermined concentration of paint within the scrubbing liquor is between 0% and 60%, by weight or between 20% and 55% by weight or between 30% and 50% by weight or between 20% and 25% by weight.

3. A process as claimed in Claim 1 or Claim 2 wherein the scrubbing liquor is initially deionized water.

4. A process as claimed in Claim 1 or Claim 2 wherein the paint is a solventborne paint and the scrubbing liquor is a liquid other than water.

5. A process as claimed in any of Claims 1-4, wherein step b. includes the use of a holding tank for receiving the scrubbing liquor from the scrubbing device, and means for circulating the scrubbing liquor from the holding tank back to the scrubbing device.

6. A process as claimed in Claim 5, further comprising the step of removing a portion of the scrubbing liquor from the holding tank once the scrubbing liquor has reached the predetermined paint concentration.

7. A process as claimed in Claim 5 or Claim 6, further comprising the step of replenishing the holding tank with scrubbing liquor.

8. A process as claimed in Claim 7, wherein the replenishing scrubbing liquor is water from the paint spray booth.

9. A process as claimed in Claim 6, wherein the removed scrubbing liquor is subjected to further treatment.

10. A process as claimed in Claim 10, wherein the further treatment includes the addition of paint solvents to the removed paint.

11. A process as claimed in any of Claims 1-10, wherein the scrubbed air stream is recirculated back to the paint spray booth.

12. A process for reclaiming paint overspray from a paint-laden air stream exiting a paint spray booth, comprising the steps of:
a. passing the air stream through a scrubbing device which includes a scrubbing liquor, the scrubbing device transferring the paint from the air stream to the scrubbing liquor;
b. collecting the scrubbing liquor in a holding tank;
c. recirculating the scrubbing liquor from the holding tank back through the scrubbing device;
d. repeating steps a. through c. until the scrubbing liquor reaches a predetermined concentration of paint;
e. removing a portion of the scrubbing liquor from the holding tank once the scrubbing liquor has reached the predetermined paint concentration; and
f. replenishing the holding tank with liquid.

13. A process as claimed in Claim 11, wherein after step d. the apparatus operates in a steady state condition in which the concentration of paint solids within the scrubbing liquor in the holding tank is maintained at approximately between 20% and 55%.

14. A process for reclaiming paint overspray from a paint-laden air stream exiting a paint spray booth, comprising the steps of:
a. passing the air stream simultaneously through a first and at least a second scrubbing device, each of the scrubbing devices including a scrubbing liquor and being effective to transfer the paint from the air stream to the scrubbing liquor; and
b. circulating the scrubbing liquor exiting the first scrubbing device to the at least second scrubbing device.

15. A process for reclaiming paint overspray from a paint-laden air stream, comprising the steps of:
a. passing the air stream through a scrubbing device which includes a scrubbing liquor, the scrubbing device transferring the paint from the air stream to the scrubbing liquor;
b. recirculating the scrubbing liquor back through the scrubbing device; and
c. repeating steps a. and b. until the scrubbing liquor reaches a predetermined concentration of paint.

16. A paint reclamation system for reclaiming paint from a paint-laden air stream exiting an operation area, comprising:
a scrubbing device for removing at least a portion of the paint from the air stream, and transferring the removed paint to a scrubbing liquor; and means for recirculating the scrubbing liquor containing the paint removed from the air stream back to the scrubbing device, to further concentrate the scrubbing liquor with paint to a desired, preselected concentration.

17. A system as claimed in Claim 16, further comprising a collecting tank for receiving the scrubbing tank being in fluid communication with the liquor, the tank recirculating means.

18. A system as claimed in Claim 16 or Claim 17, wherein the scrubbing liquor has a concentration of paint solids greater than 5%, by weight.

19. A system as claimed in Claim 17 or Claim 18, further comprising means for replenishing the collection tank with liquid, wherein the amount of the scrubbing liquor within the system remains constant, and the system operates in a steady state condition in which the level of paint solids within the scrubbing liquor contained in the collecting tank is maintained at approximately between 20% and 55%, by weight.

20. A system as claimed in any of Claims 16-19, wherein the scrubbing device is a spray tower containing packing elements.

21. A system as claimed in any of Claims 16-19, wherein the scrubbing device includes a tube-type scrubbing apparatus.

22. A system as claimed in any of Claims 16-21 further comprising means for removing from the system at least a portion of the scrubbing liquor which has reached the preselected paint concentration.

23. A system as claimed in Claim 22, further comprising means for replenishing the system with additional liquid to replace the scrubbing liquor removed from the system.

24. A system as claimed in any of Claims 16-23, further comprising at least first and second scrubbers, connected in series, so that the scrubbing liquor effluent from the first scrubber circulates into the second scrubber.

25. A paint reclamation apparatus for reclaiming paint from a paint-laden air stream, comprising:
scrubbing means in fluid communication with the air stream, the scrubbing means including a scrubbing liquor for removing at least a portion of the paint from the air stream;
a first liquid enclosure for receiving the scrubbing liquor from the scrubbing means;
a second liquid enclosure for retaining the scrubbing liquor prior to its introduction to the scrubbing means;
means for recirculating the scrubbing liquor from the first liquid enclosure to the second liquid enclosure; and
means for removing the scrubbing liquor from the first liquid enclosure.

26. An apparatus for reclaiming paint from a paint-laden air stream exiting a paint spray booth, comprising:
a spray tower contained packing elements, the packed spray tower located adjacent the paint spray booth and including a liquid scrubbing medium passing through the spray tower;
means for circulating the air stream from the paint spray booth through the packed spray tower, the spray tower removing at least a portion of the paint from the air stream and permitting its transfer from the air stream to the liquid scrubbing medium;
a tank for receiving the liquid scrubbing medium containing the paint removed from the air stream from the spray tower; and
means for recirculating the liquid scrubbing medium from the tank to the spray tower.
